# EUROPEAN PATENT SPECIFICATION

(11) **EP 2 800 317 B1**
(45) Date of publication and mention of the grant of the patent: **14.08.2019**
(21) Application number: 12862747.8
(22) Date of filing: 12.06.2012
(51) Int. Cl.: H04L 12/70, H04L 29/06, H04L 29/08, H04L 29/12

(54) **TERMINAL DEVICE AND USER INFORMATION SYNCHRONIZATION METHOD**
ENDGERÄT VORRICHTUNG UND SYNCHRONISATIONSVERFAHREN FÜR BENUTZERINFORMATIONEN
DISPOSITIF DE TERMINAL ET PROCÉDÉ DE SYNCHRONISATION D'INFORMATIONS D'UTILISATEUR

(30) Priority: 27.12.2011 CN 201110443780
(43) Date of publication of application: 05.11.2014
(73) Proprietor: ZTE Corporation, Shenzhen, Guangdong 518057 (CN)
(72) Inventor: LIU, Weipeng, Shenzhen Guangdong 518057 (CN)
(74) Representative: Gevers Patents
(86) International application number: PCT/CN2012/076781
(87) International publication number: WO 2013/097419

(56) References cited:
- CN-A- 101 035 031
- CN-A- 101 340 371
- US-A1- 2003 177 196
- US-A1- 2004 049 673
- US-A1- 2009 193 129
- US-A1- 2011 035 784
- US-A1- 2011 296 036

## Description

### TECHNICAL FIELD

The disclosure relates to the field of communication technology, and in particular to a terminal device and a user information synchronization method.

### BACKGROUND

With the increase of network bandwidth, particularly the rapid popularization of 3rd Generation (3G) mobile communication technology services, a data card, as a portable communication terminal, can provide a function of accessing a network, and a terminal device may access the network anytime and anywhere through the data card. Therefore, the data card is applied more and more widely, and also becomes an important Internet communication tool for businessmen. At the same time, as the continuous development of relevant technology of the data card, a driver-free data card has been widely applied due to features of no need of installing programs on a Personal Computer (PC) side, plug and play, rapid networking, supporting Web UI access and the like. Due to unique technical features, the driver-free data card cannot directly use many services implemented by a traditional data card. Therefore, original relevant technologies need to be reformed and innovated.
Due to the adoption of Browse/Server (BS) structure, Web applications based on a Hypertext Transport Protocol (HTTP) has features of thin client, flexible implementation, uniform interface, simple protocol and the like, and has been widely applied in Internet. However, since the HTTP protocol adopts an operating mode of client request-server response and would not record relevant information of previous connection requests, this protocol has no memory for transaction processing. The lack of relevant information means that previous communication information must be retransmitted if needed in subsequent processing. This feature leads to increase of times of transmission or overlarge data amount to be transmitted each connection. In order to compensate this drawback, Cookie technology emerges at the right moment. Cookie is a kind of special information which a Web server generates and sends to a client to store during the process of browsing a Web page. The Cookie is a simple text file stored in a client, and the text file is associated with a specified Web document and stores the information involved when the client accesses this Web page, such as a user Identity (ID), a password, the browsed Web page, and duration of stay when the Web page is browsed. When the client accesses this Web page again, the Web page can acquire relevant information of the client by reading Cookie, and thus makes direct login, prompts welcomes, returns user-predefined personalized setting and gathers statistics of user access information, thereby greatly simplifying the operation behaviour of a Web visitor, meeting the requirement of personalized setting and providing a data basis for the Web server gathering behaviour characteristics of the visitor.

At present, popular browsers such as IE, Firefox and Chrome all support Cookie function by default. However, since various browser manufacturers implement browsers by using different ways, different browsers store Cookie files at different locations by means of different manners, and thus different browsers cannot share Cookie information of a user. This means that if a user logs in one same website by using multiple browsers, the user needs to enter a user name or password many times or make page settings many times. Since the information of the Cookie file corresponds to a computer account used by the user, when the user visits a website with preset Cookie information by using a different computer account or a different computer, the user still needs to enter the user name or password again, thus increasing the trivialness of operations of the user.

Therefore, how to implement synchronization of a data card user's Cookie information automatically by means of a data card becomes a research subject for those skilled in the art, so as to enable the data card user to use the Cookie information across multiple browsers and multiple PCs during the use of the data card, reduce the trivialness of operations of the user and improve usage experience of the data card user.

US 2004/0049673 A1 discloses a personal cookie repository service.

### SUMMARY

The disclosure provides a terminal device and a user information synchronization method.

The features of the method and the terminal device according to the present invention are defined in the independent claims, and the preferable features according to the present invention are defined in the dependent claims.

To sum up, the disclosure has the following beneficial effects:

The technical solution of the disclosure can automatically achieve the use of a data card user's Cookie information across multiple browsers and multiple PCs without installation of additional tools by the data card user on a PC, thereby effectively recording access preference and login information of the data card user, improving the usage experience of the data card user, and enhancing the overall competitiveness of driver-free data cards for a portable broadband wireless access device.

### BRIEF DESCRIPTION OF THE DRAWINGS

Fig. 1 is a structural diagram of a terminal device according to an embodiment of the disclosure;
Fig. 2 is a flowchart of an information synchronization method according to an embodiment of the disclosure; and
Fig. 3 is a flowchart of filtering and analyzing a packet by an information analysis unit according to an embodiment of the disclosure.

### DETAILED DESCRIPTION

How to automatically implement synchronization of Cookie information of a user without installing a program on a PC side and without manual intervention is a problem to be solved in the disclosure.

According to the implementation description and principle of Cookie relevant protocols, Cookie is a part of content transmitted during the interaction between a Web server side and a client (typically, a browser), of which the content may be arbitrary but within an allowed length range. The client stores Cookie in a local machine in a defined format, for example, the IE stores the Cookie into a txt file locally, and a client program manages and retrieves the txt file, wherein expired Cookie would be deleted automatically. Each time a client accesses a webpage in a directory under a domain, the client retrieves, according to a special rule, valid Cookie information saved locally which belongs to the directory under the domain, and finally sends relevant information to the server side through an HTTP protocol packet. By default, the HTTP protocol packet is transmitted on a network by using a non-encrypted mode, and the Cookie information to be transmitted is transmitted in a specified format Cookie: PREF=ID=bbf0cbbfe429532d:U=ef77fc46b692340e:FF=1:LD=zh.

When a user terminal such as a data card accesses a webpage, all HTTP request packets and response packets need to be routed and forwarded by the data card. Therefore, by means of network packet analysis technology, parsing and analyzing all HTTP packets flowing through the data card may acquire domain name information of a website accessed by a user and may detect whether Cookie information is included when a webpage is accessed. If the Cookie information is detected, the relevant information can be stored in the data card by a specified manner. When it is detected that the user accesses the webpage again, if no Cookie information is included in an HTTP request packet, the data card may retrieve previously stored relevant Cookie information, modify the HTTP request packet to be sent by adding the previously stored Cookie information to the HTTP request packet and modifying checking information and a relevant attribute of the HTTP request packet, and finally send the HTTP request packet. Thus, automatic detection and automatic synchronization functions of user Cookie information are achieved.

To clearly show the purpose, technical solution and advantages of the disclosure, embodiments of the disclosure are elaborated below in combination with the drawings.

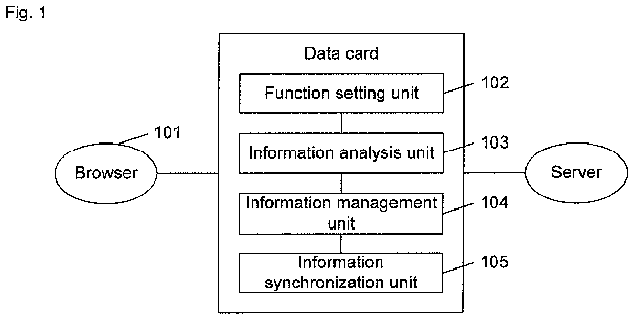

Fig. 1 is a structure diagram of a terminal device according to an embodiment of the disclosure. The embodiment is illustrated by taking a data card for an example, involving a Web browser 101 and a Web server. The data card includes a function setting unit 102, an information analysis unit 103, an information management unit 104 and an information synchronization unit 105, each of which implements a different and relatively independent function.

The function setting unit 102 is integrated in the Web server inside the data card, and may respond to a setting request from a data card user and complete setting actions such as start-up and shutdown of the synchronization function, multi-user synchronization and cancellation of user information. The function setting unit may accept relevant settings made to the functions of the disclosure by the data card user via the Web browser, such as setting of start-up and shutdown functions, whether to support multi-user synchronization, and user information cancellation. If a start-up function is set, the information analysis unit 103, the information management unit 104 and the information synchronization unit 105 are started to work. If a shutdown function is set, the information analysis unit 103, the information management unit 104 and the information synchronization unit 105 are stopped. If the multi-user synchronization function is set, the information analysis unit 103, the information management unit 104 and the information synchronization unit 105 distinguish different computer users according to MAC addresses, and analyze and synchronize relevant Cookie information according to users. If the user information cancellation function is set, the data card cancels all previously stored Cookie information of a user to protect the data security of the user.

The data card user accesses a setting management page provided by the data card through the Web browser 101, to set the start-up and shutdown of the synchronization function, whether to support multi-user synchronization, and cancellation of user information.

The information analysis unit 103 is mainly configured to: detect all packets flowing through the data card by means of a netfilter and the like inside the data card, filter all the packets according to the characteristics of different network layers of packets, and only detect and analyze the packets of an HTTP protocol and a relevant protocol. After an HTTP request packet is acquired, the information analysis unit 103 analyzes the HTTP header information included in the HTTP request packet, acquires the URL information requesting to be accessed, and detect whether Cookie information of a user is included in the HTTP request packet. If the Cookie information is included in the HTTP request packet, the information analysis unit 103 sends the Cookie information to the information management unit 104 to process, for example, update and store. If no Cookie information is included in the HTTP request packet, the information analysis unit 103 acquires through the information management unit 104 according to an MAC address, access URL information and the like whether the Cookie information of the user is stored previously. If the Cookie information of the user is not stored previously, the information analysis unit 103 forwards the packet without any modification. If the Cookie information of the user is stored previously, the information analysis unit 103 calls the information synchronization unit 105 to modify the HTTP request packet.

The information management unit 104 in the data card is mainly configured to: according to MAC, URL and Cookie information and the like provided by an interface and in combination with a relevant configuration attribute and command, store the Cookie information in a specific format, or acquire the Cookie information corresponding to the URL to return the Cookie information to the information synchronization unit 105. Since different levels of domain names correspond to different user Cookie information, the disclosure stores corresponding URL-MAC-Cookie information by using a tree-form data structure. When Cookie information corresponding to a URL is inquired, the data card traverses starting from the root node first-level nodes to find corresponding first-level domain names, and further traverse the second-level domain names under the first-level domain names until the Cookie information corresponding to the domain name is found. For security considerations, the tree-form structure of URL-MAC-Cookie information is stored in an EFS partition of the data card after simple encryption of a Data Encryption Standard (DES).

The information synchronization unit 105 in the data card modifies the HTTP request packet according to the Cookie information transmitted by an interface by means of the netfilter and relevant technology, adds the matched user Cookie information to the header of the HTTP request packet, modifies checking information of the header of the TCP packet, and then sends the modified packet. Meanwhile, the information synchronization unit needs to appropriately modify the sequence number of the HTTP response packet and the relevant TCP packet returned after modification of the request packet.

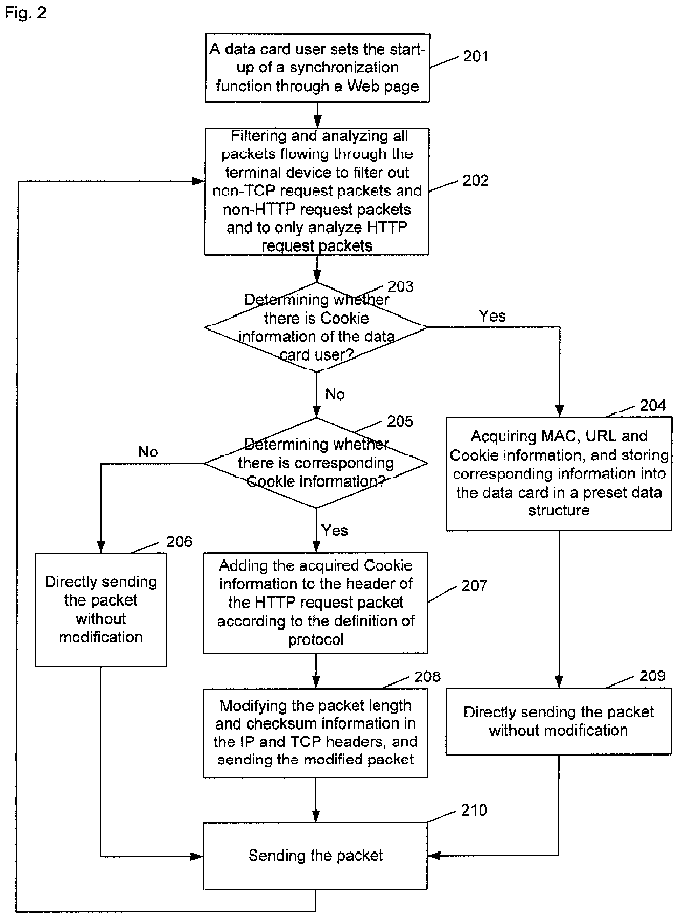

Refer to Fig.2, which is a flowchart of an information synchronization method according to an embodiment of the disclosure. The method includes the following steps:
Step 201: A data card user accesses a setting management page provided by a data card through a Web browser, to make the setting of start-up of a synchronization function. After the synchronization function is started, a Cookie synchronization function is started immediately.
Step 202: All packets flowing through the terminal device are filtered and analyzed to filter out non-TCP request packets and non-HTTP request packets and to only analyze HTTP request packets.
Step 203: It is determined whether the header of an HTTP request packet includes Cookie attribute information. If the header of the HTTP request packet includes Cookie attribute information, Step 204 is executed. If the header of the HTTP request packet does not include Cookie attribute information, Step 205 is executed.
Step 204: MAC, URL and Cookie information and the like in the HTTP request packet is acquired, and the corresponding information is stored into the data card in a preset data structure. Then, Step 209 is executed.
   If the header of the HTTP request packet includes Cookie information, the MAC and Cookie information in the HTTP request packet is acquired, and meanwhile information of GET and HOST attributes in the HTTP request packet is acquired to form complete URL information. Finally, the acquired information is stored into the EFS of the data card in a preset data structure by using through an encryption algorithm, via the information management unit.
Step 205: It is determined, in combination with configuration, an MAC address, URL information and the stored Cookie information, whether there is corresponding Cookie information. If there is the corresponding Cookie information, Step 207 is executed. If there is no corresponding Cookie information, Step 206 is executed.
   If no Cookie information is found in the header of the HTTP request packet, it is found through the information management unit in combination with the MAC address and the URL information in the HTTP request packet whether there is previously stored corresponding Cookie information.
Step 206: If there is no previously stored corresponding Cookie information, the HTTP request packet is directly forwarded without modification.
Step 207: If there is the previously stored corresponding Cookie information, the acquired Cookie information is added to the header of the HTTP request packet in the format defined according to the HTTP protocol.
Step 208: The packet length and checking information in the IP header and the TCP header are modified, and the modified packet is sent. Then, Step 210 is executed.
   In order to keep the accuracy of the modified packet, the packet length information in the IP header and the TCP header is modified according to the TCP/IP protocol specification, and the checking information in the IP header and the TCP header is modified according to a check calculation method.
Step 209: After the Cookie information is acquired and stored, the packet is directly forwarded without modification.
Step 210: The packet is directly forwarded.

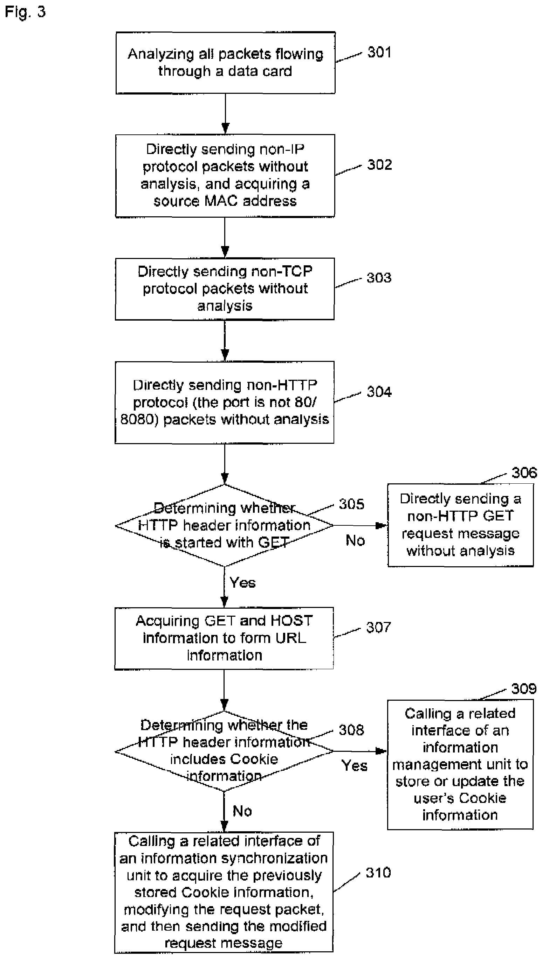

   Fig. 3 is a flowchart of filtering and analyzing a packet by an information analysis unit according to an embodiment of the disclosure. The flow includes the following steps:
Step 301: All packets flowing through a data card are analyzed.
   The information analysis unit analyzes all packets flowing through the data card to acquire relevant information of an MAC layer.
Step 302: Non-IP protocol packets are directly forwarded without analysis, and a source MAC address is acquired.
   According to the definition of MAC layer protocol, it is determined whether a packet of the MAC layer is an IP packet. If the packet of the MAC layer is not an IP packet, the packet is directly forwarded without analysis, and a next packet is analyzed. If the packet of the MAC layer is an IP packet, the corresponding source MAC address is acquired.
Step 303: Non-TCP protocol packets are directly forwarded without analysis.
   According to the definition of IP layer protocol, it is determined whether a packet of the IP layer is a TCP protocol packet. If the packet of the IP layer is not a TCP protocol packet, the packet is directly sent without analysis, and a next packet is analyzed.
Step 304: Non-HTTP protocol (the port is not 80/8080) packets are directly forwarded without analysis.
   According to the definition of TCP layer protocol, it is determined, according to whether the destination port is 80/8080, whether a packet of the TCP layer is an HTTP protocol packet. If the packet of the TCP layer is an HTTP protocol packet, the packet is directly forwarded without analysis.
Step 305: It is determined whether the information of the HTTP header is started with GET. If the information of the HTTP header is started with GET, Step 307 is executed. If the information of the HTTP header is not started with GET, Step 306 is executed.
   The HTTP protocol data information is analyzed to determine whether the HTTP header is started with GET information, thereby determining whether the HTTP packet is an HTTP request packet.
Step 306: If the packet is not an HTTP request packet, the packet is directly forwarded without analysis.
Step 307: GET and HOST information is acquired to form URL information.
   If the packet is an HTTP request packet, information of GET and HOST attributes in the HTTP header is acquired, and the information of the GET attribute and the information of the HOST attribute are combined to form complete URL information.
Step 308: It is determined whether the HTTP header includes Cookie information. If the HTTP header includes Cookie information, Step 309 is executed. If the HTTP header does not include Cookie information, Step 310 is executed.
   It is searched for in the HTTP header whether there is Cookie: attribute, so as to determine whether the HTTP header includes the Cookie information.
Step 309: If the HTTP header includes the Cookie information, a related interface of the information management unit is called to store or update the MAC-URL-Cookie information of the user.
Step 310: If the HTTP header does not include the Cookie information, a related interface of the information synchronization unit is called to acquire the previously stored Cookie information, and the request packet is modified and then sent.

The technical solution of the disclosure can automatically record and match Cookie information of a user through the analysis and modification of a network packet. The disclosure can automatically achieve the use of Cookie information of a user across multiple browsers and multiple PCs without installation of additional tools by the data card user on a PC, thereby effectively recording access preference and login information of the user, improving the usage experience of the data card user and being convenient for users.

Of course, the disclosure may also have many implementations.

## Claims

1. A user information synchronization method performed by a terminal device, the method comprising:
parsing and analyzing (204), by the terminal device, a Hypertext Transport Protocol, HTTP, request packet flowing through the terminal device to acquire domain name information of a website accessed by a user and detect whether Cookie information is included in the HTTP request packet when a webpage is accessed, and storing the Cookie information into the terminal device when the Cookie information is detected; **characterised by**,
when it is detected that the user accesses the webpage again, if no Cookie information is included in a header of an HTTP request packet, searching, by the terminal device, in accordance with an MAC address and URL information in the HTTP request packet, for previously stored relevant Cookie information, when previously stored relevant Cookie information is found modifying (207) the HTTP request packet by adding the previously stored relevant Cookie information to the header of the HTTP request packet, and then sending (210) the modified HTTP request packet, so as to implement synchronization of the Cookie information of the user,
wherein the step of parsing and analyzing by the terminal device an HTTP request packet flowing through the terminal device comprises: when a header of the HTTP request packet includes the Cookie information, acquiring a Media Access Control, MAC, address and the Cookie information in the HTTP request packet, and acquiring information of GET and HOST attributes in the HTTP request packet to form complete Uniform Resource Locator, URL, information, and storing the acquired information into an Encrypting File System, EFS, of the terminal device by using a preset data structure and an encryption algorithm,
wherein, when no previously stored relevant Cookie information is found in the searching step, the terminal device forwarding the HTTP request packet without modification.

2. The method according to claim 1, wherein the step of parsing and analyzing, by a terminal device, an HTTP request packet flowing through the terminal device comprises:
filtering and analyzing, by the terminal device, all packets flowing through the terminal device to filter out non-Transmission Control Protocol (TCP) request packets and non-HTTP request packets and to only analyze HTTP request packets.

3. The method according to claim 1, further comprising: modifying (208) packet length information in an Internet Protocol (IP) header and a TCP header according to a TCP/IP protocol specification, and modifying check information in the IP header and the TCP header according to a check calculation method, so as to keep accuracy of the modified HTTP request packet.

4. A terminal device configured to perform the method of claim 1.

5. The terminal device according to claim 4, further comprising: a function setting unit (102) integrated in a server inside the terminal device and configured to respond to a setting request from a user of the terminal device.

6. The terminal device according to claim 4, wherein the terminal device is configured to filter and analyze all packets flowing through the terminal device to filter out non-TCP request packets and non-HTTP request packets and to only analyze HTTP request packets.

## Patentansprüche

1. Benutzerinformationen-Synchronisationsverfahren, das von einer Endgerätevorrichtung durchgeführt wird, wobei das Verfahren umfasst:
Parsen und Analysieren (204), durch die Endgerätevorrichtung, eines Hypertext Transport Protocol-, HTTP, Anforderungspakets, das durch die Endgerätevorrichtung fließt, um Domänennameninformationen einer Website zu erhalten, auf die von einem Benutzer zugegriffen wird, und zu erfassen, ob Cookie-Informationen im HTTP-Anforderungspaket eingeschlossen sind, wenn auf eine Webseite zugriffen wird, und Speichern der Cookie-Informationen in der Endgerätevorrichtung, wenn die Cookie-Informationen erfasst werden;
**gekennzeichnet durch**
wenn erfasst wird, dass der Benutzer erneut auf die Webseite zugreift, wenn keine Cookie-Informationen in einem Header eines HTTP-Anforderungspakets eingeschlossen sind, Suchen, durch die Endgerätevorrichtung, in Übereinstimmung mit einer MAC-Adresse und URL-Informationen im HTTP-Anforderungspaket, nach zuvor gespeicherten relevanten Cookie-Informationen, wenn zuvor gespeicherte relevante Cookie-Informationen gefunden werden, Modifizieren (207) des HTTP-Anforderungspakets durch Hinzufügen der zuvor gespeicherten relevanten Cookie-Informationen zum Header des HTTP-Anforderungspakets, und dann Senden (210) des modifizierten HTTP-Anforderungspakets, um Synchronisation der Cookie-Informationen des Benutzers zu implementieren,
wobei der Schritt des Parsens und Analysierens, durch die Endgerätevorrichtung, eines HTTP-Anforderungspakets, das durch die Endgerätevorrichtung fließt, umfasst: wenn ein Header des HTTP-Anforderungspakets die Cookie-Informationen einschließt, Erhalten einer Media Access Control-, MAC, Adresse und der Cookie-Informationen im HTTP-Anforderungspaket, und Erhalten von Informationen von GET- und HOST-Attributen im HTTP-Anforderungspaket, um vollständige Uniform Resource Locator-, URL, Informationen zu bilden, und Speichern der erhaltenen Informationen in einem Encrypting File System, EFS, der Endgerätevorrichtung unter Verwendung einer voreingestellten Datenstruktur und eines Verschlüsselungsalgorithmus,
wobei, wenn im Suchschritt keine zuvor gespeicherten relevanten Cookie-Informationen gefunden werden, Weiterleiten des HTTP-Anforderungspakets durch die Endgerätevorrichtung ohne Modifikation.

2. Verfahren nach Anspruch 1, wobei der Schritt des Parsens und Analysierens, durch eine Endgerätevorrichtung, eines HTTP-Anforderungspakets, das durch die Endgerätevorrichtung fließt, umfasst:
Filtern und Analysieren, durch die Endgerätevorrichtung, von allen Paketen, die durch die Endgerätevorrichtung fließen, um Nicht-Transmission Control Protocol- (TCP) Anforderungspakete, und Nicht-HTTP-Anforderungspakete auszufiltern, und nur HTTP-Anforderungspakete zu analysieren.

3. Verfahren nach Anspruch 1, weiter umfassend: Modifizieren (208) von Paketlängeninformationen in einem Internet Protocol- (IP) Header und einem TCP-Header gemäß einer TCP/IP-Protokollspezifikation, und Modifizieren von Prüfinformationen im IP-Header und dem TCP-Header gemäß einem Prüfberechnungsverfahren, um Richtigkeit des modifizierten HTTP-Anforderungspakets zu bewahren.

4. Endgerätevorrichtung, die so konfiguriert ist, dass sie das Verfahren nach Anspruch 1 durchführt.

5. Endgerätevorrichtung nach Anspruch 4, weiter umfassend: eine Funktionseinstelleinheit (102), die in einem Server innerhalb der Endgerätevorrichtung integriert und so konfiguriert ist, dass sie auf eine Einstellanforderung von einem Benutzer der Endgerätevorrichtung reagiert.

6. Endgerätevorrichtung nach Anspruch 4, wobei die Endgerätevorrichtung so konfiguriert ist, dass sie alle Pakete, die durch die Endgerätevorrichtung fließen, filtert und analysiert, um Nicht-TCP-Anforderungspakete und Nicht-HTTP-Anforderungspakete auszufiltern und nur HTTP-Anforderungspakete zu analysieren.

## Revendications

1. Procédé de synchronisation d'informations utilisateur réalisé par un dispositif de terminal, le procédé comprenant :
l'analyse syntaxique et l'analyse (204), par le dispositif de terminal, d'un paquet de demande de protocole de transport hypertexte, HTTP, circulant à travers le dispositif de terminal pour acquérir des informations de nom de domaine d'un site Web auquel accède un utilisateur et détecter si des informations de témoin sont incluses dans le paquet de demande HTTP lorsqu'on accède à une page Web, et le stockage des informations de témoin dans le dispositif de terminal lorsque les informations de témoin sont détectées ;
**caractérisé par**,
lorsqu'il est détecté que l'utilisateur accède à nouveau à la page Web, si aucune information de témoin n'est incluse dans un en-tête d'un paquet de demande HTTP, la recherche, par le dispositif de terminal, selon une adresse MAC et des informations URL dans le paquet de demande HTTP, d'informations de témoin pertinentes précédemment stockées, lorsque des informations de témoin pertinentes précédemment stockées sont trouvées, la modification (207) du paquet de demande HTTP par ajout des informations de témoin pertinentes précédemment stockées à l'en-tête du paquet de demande HTTP, et l'envoi (210) du paquet de demande HTTP modifié, de façon à implémenter une synchronisation des informations de témoin de l'utilisateur,
dans lequel l'étape d'analyse syntaxique et d'analyse par le dispositif de terminal d'un paquet de demande HTTP circulant à travers le dispositif de terminal comprend : lorsqu'un en-tête du paquet de demande HTTP inclut les informations de témoin, l'acquisition d'une adresse de contrôle d'accès au support, MAC, et des informations de témoin dans le paquet de demande HTTP, et l'acquisition d'informations d'attributs GET et HOST dans le paquet de demande HTTP pour former des informations de localisateur uniforme de ressources, URL, complètes, et le stockage des informations acquises dans un système de chiffrement des fichiers, EFS, du dispositif de terminal en utilisant une structure de données préétablie et un algorithme de chiffrement,
dans lequel, lorsque aucune information de témoin pertinente précédemment stockée n'est trouvée à l'étape de recherche, le réacheminement par le dispositif de terminal du paquet de demande HTTP sans modification.

2. Procédé selon la revendication 1, dans lequel l'étape d'analyse syntaxique et d'analyse, par un dispositif de terminal, d'un paquet de demande HTTP circulant à travers le dispositif de terminal comprend :
le filtrage et l'analyse, par le dispositif de terminal, de tous les paquets circulant à travers le dispositif de terminal pour éliminer par filtrage des paquets de demande de non-protocole de commande de transmission (TCP) et des paquets de demande non-HTTP et pour analyser uniquement des paquets de demande HTTP.

3. Procédé selon la revendication 1, comprenant en outre : la modification (208) d'informations de longueur de paquet dans un en-tête de protocole Internet (IP) et un en-tête TCP selon une spécification de protocole TCP/IP, et la modification d'informations de vérification dans l'en-tête IP et l'en-tête TCP selon un procédé de calcul de vérification, de façon à conserver l'exactitude du paquet de demande HTTP modifié.

4. Dispositif de terminal configuré pour réaliser le procédé de la revendication 1.

5. Dispositif de terminal selon la revendication 4, comprenant en outre : une unité de paramétrage de fonction (102) intégrée dans un serveur à l'intérieur du dispositif de terminal et configurée pour répondre à une demande de paramétrage provenant d'un utilisateur du dispositif de terminal.

6. Dispositif de terminal selon la revendication 4, dans lequel le dispositif de terminal est configuré pour filtrer et analyser tous les paquets circulant à travers le dispositif de terminal pour éliminer par filtrage des paquets de demande non-TCP et des paquets de demande non-HTTP et pour analyser uniquement des paquets de demande HTTP.
